# FASCICULE DE BREVET EUROPEEN

(11) **EP 3 600 863 B1**
(45) Date de publication et mention de la délivrance du brevet: **06.09.2023**
(21) Numéro de dépôt: 18722659.2
(22) Date de dépôt: 29.03.2018
(51) Int. Cl.: B29D 30/06, B29C 33/62

(54) **MEMBRANE DE CUISSON POUR PNEUMATIQUE**
AUSHÄRTEMEMBRAN FÜR EINEN REIFEN
CURING MEMBRANE FOR A TYRE

(30) Priorité: 30.03.2017 FR 1752723
(43) Date de publication de la demande: 05.02.2020
(73) Titulaire: Compagnie Générale des Etablissements Michelin, 63000 Clermont-Ferrand (FR)
(72) Inventeur: PIALOT, Frédéric, 63040 Clermont-Ferrand Cedex 9 (FR); BOR, Gérard, 63040 Clermont-Ferrand Cedex 9 (FR); FAUGERAS, Alain, 63040 Clermont-Ferrand Cedex 9 (FR); RAMZ, Frédéric, 63040 Clermont-Ferrand Cedex 9 (FR)
(74) Mandataire: Redouté, Gilles Pierre
(86) Numéro de dépôt international: PCT/FR2018/050786
(87) Numéro de publication internationale: WO 2018/178587

(56) Documents cités:
- EP-A2- 0 385 919
- JP-A- 2005 280 259
- US-A1- 2009 242 103

## Description

La présente invention se rapporte au domaine des pneumatiques et concerne les membranes de cuisson utilisées dans les procédés de fabrication des pneumatiques.

Les pneumatiques sont habituellement obtenus par moulage et vulcanisation d'une enveloppe crue à l'intérieur d'un moule de cuisson. Les parois externes de l'enveloppe sont plaquées contre les parois internes du moule de cuisson au moyen d'une membrane de cuisson expansible sous l'effet d'un fluide sous pression. Le dessin de la bande de roulement des garnitures du moule et celui des coquilles s'imprime sur l'enveloppe crue qui est vulcanisée à l'aide de la chaleur. La membrane de cuisson se déploie à l'intérieur de l'enveloppe crue avant la cuisson et elle se replie à la fin. De ce fait, des mouvements relatifs se produisent entre la membrane et l'enveloppe crue et cuite, ce qui est susceptible de produire des déformations de l'enveloppe et l'usure de la membrane. Pour prévenir cela, il faut empêcher l'adhésion de l'enveloppe à la membrane de cuisson, ce qui est fait habituellement en traitant l'enveloppe crue par enduction avec une solution à propriétés anti-collantes, par exemple à base de polymères de silicone, connue sous le nom de « badigeon ». Un tel traitement doit être fait avant la cuisson, par un opérateur qui travaille sur un poste dédié, en sortie du procédé d'assemblage. Cette opération s'avère très consommatrice de temps et de main d'oeuvre.

Pour pallier à ce problème, le document FR 2495181 propose d'appliquer un traitement à la membrane de cuisson. Ainsi, on enduit la membrane d'une composition de lubrifiant comportant un mélange de bentonite, d'un polydiméthylsiloxane, d'un polyéthylène glycol et de tensioactifs. Cette composition est une émulsion ou une dispersion aqueuse qu'on pulvérise sur la surface externe de la membrane et qu'on fait ensuite sécher. Il a toutefois été constaté qu'au-delà de 6 à 9 cycles de vulcanisation, la membrane a tendance à coller à l'enveloppe. De ce fait il faut l'enduire à nouveau, ce qui à pour conséquence des coupures dans le processus de fabrication et donc une productivité moindre.

Le document US 4863650 propose une solution pour remédier à ce problème, solution qui consiste à traiter la surface de la membrane pour la rendre rugueuse et à lui appliquer un film à base de composés de silicone qui qui polymérisent sous l'influence de l'humidité ou de la chaleur pour former des polymères réticulés adhérant à la surface de la membrane. Une telle membrane permet de réaliser environ 300 cycles de cuissons. Cette solution s'avère, certes, plus avantageuse que la précédente, mais le film qui lui est appliqué ne résiste toutefois pas aux nombreuses sollicitations et agressions à laquelle elle est soumise lors des différentes phases des cycles de cuisson. On sait notamment qu'elle subit de nombreux cycles de dilatations/rétractions et que des frottements se produisent à l'interface avec l'enveloppe crue et cuite, ce qui a tendance à abraser le film. D'autres membranes de cuisson pour pneumatique, et recouvertes d'un film de revêtement, sont décrites dans les documents EP 0 385 919 A2 et JP 2005 280259 A.

Un objectif de l'invention est de remédier aux inconvénients des documents précités et de proposer une solution pour améliorer la durée de vie d'une membrane de cuisson traitée pour permettre le moulage et le démoulage facile d'un pneumatique.

Cet objectif est atteint par l'invention qui propose une membrane de cuisson pour pneumatique selon la revendication 1.

Une membrane de cuisson passe, en fonctionnement, d'un état replié à un état déployé quand elle est gonflée par le fluide caloporteur sous pression qui est injecté à l'intérieur de la membrane lors de la cuisson. En dehors de la cuisson quand elle est gonflée pour prendre une forme torique, la membrane est à l'état replié. Par membrane non gonflée, on comprend une membrane qui n'est pas déployée, mais repliée, voire étirée. Selon l'invention, on recouvre d'un film formé d'une ou plusieurs couches de revêtement anti-adhérent d'épaisseur variable, non nulle, la surface de la membrane de cuisson de manière à privilégier les zones de la membrane qui sont le plus sollicitées. Autrement dit, ces zones sont recouvertes d'une couche anti-adhérente d'épaisseur supérieure aux autres. Ainsi, à l'état non gonflé, la membrane présente un revêtement d'épaisseur variable, non nulle, sur sa surface externe faisant face à la surface interne de l'ébauche de pneumatique et, lorsqu'elle est à l'état déployé, le film de revêtement présente une épaisseur constante. Ceci permet d'avoir une même tenue dans le temps du revêtement sur toute la surface de la membrane et d'éviter ainsi le risque de détérioration et, par conséquent, celui d'apparition de points de rupture pouvant mener à une perte d'efficacité du revêtement.

De manière utile, ledit film de revêtement est élastique. Cela permet au film de s'allonger et de suivre les déformations de la membrane lors de son déploiement.

De préférence, ladite paroi a une épaisseur variable et l'épaisseur du film de revêtement varie de manière inversement proportionnelle avec l'épaisseur de la paroi.

Ceci permet d'obtenir une épaisseur de revêtement constante, quelle que soit la zone de la membrane, en position déployée de celle-ci. En effet, lors de son déploiement, la membrane s'allonge pour arriver à quasiment doubler son volume. Le film de revêtement de l'invention permet, de par son élasticité, de s'allonger pour suivre la déformation de la membrane. De plus, le film de revêtement est plus épais aux endroits où la paroi de la membrane est plus fine, car c'est cette paroi qui subira la plus grande déformation. Or, l'épaisseur du film de revêtement doit être constante lors du déploiement de la membrane à l'intérieur de l'ébauche afin qu'elle puisse résister aux agressions et frottements en tout point de sa surface, tout en optimisant le dépôt des couches anti-adhérentes. En effet, cela permet d'optimiser chaque mm² de surface du film de revêtement pour en utiliser toujours moins.

Avantageusement, le rapport des épaisseurs de la paroi de la membrane dans deux zones contiguës à l'état non gonflé est égal au rapport des épaisseurs du film de revêtement. Cela permet d'obtenir un film de revêtement d'épaisseur uniforme sur toute la surface de la membrane lorsqu'elle est déployée.

De préférence, la surface externe de ladite paroi est recouverte d'un film de revêtement externe. En effet, on recouvre la surface qui vient en contact avec l'enveloppe crue et cuite et qui subit des fortes sollicitations de frottement lors du déploiement et de la rétraction de la membrane.

Avantageusement, la surface interne de ladite paroi est recouverte d'un film de revêtement interne. Il s'est avéré, lors des tests effectués en laboratoire, que recouvrir également la paroi interne par dépôt d'une ou plusieurs couches de revêtement de la membrane permettait d'allonger sa durée de vie.

De préférence, la composition du film de revêtement interne est différente de celle du film de revêtement externe. La surface externe de la membrane doit résister aux actions mécaniques de frottement au contact de l'enveloppe, alors que la surface interne subit l'hydrolyse et l'action de la température de la vapeur d'eau. De ce fait, on choisit les compositions des films de revêtement en conséquence.

Le but de l'invention est également atteint avec un procédé de fabrication d'une membrane de cuisson pour pneumatique selon la revendication 9.

De préférence, on effectue ledit dépôt de composition anti-adhérente par pulvérisation à l'aide d'un pistolet de peinture et en déplaçant axialement et radialement ledit pistolet par rapport à la membrane lors de la rotation de celle-ci.

Avantageusement, l'épaisseur dudit film varie avec le rapport entre la vitesse de déplacement axial du pistolet de peinture et la vitesse de rotation de la membrane.

L'invention a également pour l'utilisation d'une membrane de cuisson selon l'invention dans un procédé de fabrication de pneumatique.

L'invention sera mieux comprise grâce à la suite de la description, qui s'appuie sur les figures suivantes :
- la figure 1 est une vue schématique d'une installation qui réalise le dépôt d'un revêtement sur une membrane de cuisson de l'invention ;
- la figure 2a est une vue en coupe d'une membrane de cuisson non recouverte de revêtement en position non déployée et la figure 2b est une vue en coupe de la membrane de la figure 2a en position déployée ;
- la figure 3a est une vue en coupe d'une membrane de cuisson recouverte d'un film de revêtement à l'extérieur en position non déployée, la figure 3b est une vue en coupe de la membrane de la figure 3a en position déployée et les figures 3c et 3d sont des vues des détails A et B à échelle agrandie de la membrane illustrée aux figures 3a et 3b ;
- la figure 4a est une vue en coupe d'une membrane de cuisson recouverte de film de revêtement à l'extérieur et à l'intérieur en position non déployée, la figure 4b est une vue en coupe de la membrane de la figure 4a en position déployée et les figures 4c et 4d sont des vues des détails C et D à échelle agrandie de la membrane illustrée aux figures 4a et 4b.

Sur les différentes figures, les éléments identiques ou similaires portent la même référence. Leur description n'est donc pas systématiquement reprise.

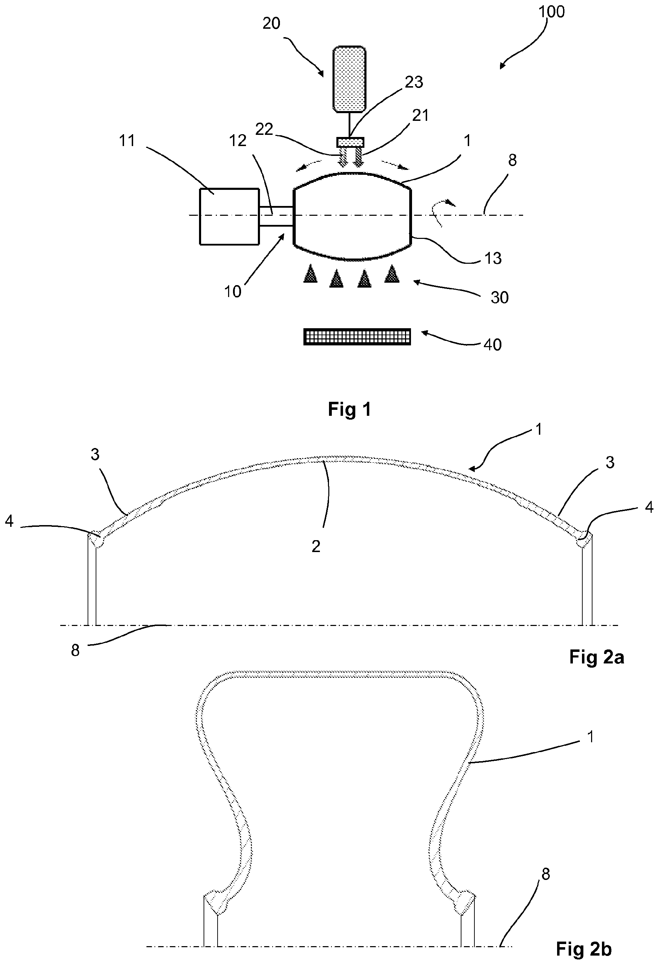

Les figures 2a et 2b illustrent par des vues en coupe axiale la moitié d'une membrane de cuisson 1, qui a une forme de révolution autour d'un axe central 8, avant d'être recouverte de couche de revêtement anti-adhérent. La membrane de cuisson 1 comporte une paroi flexible et est réalisée en un caoutchouc de type butyle. La membrane de cuisson 1 est illustrée à l'état non déployé à la figure 2a, elle a une forme générale tubulaire de section axiale ovale. La membrane présente une partie centrale 2 d'épaisseur constante délimitée axialement par deux zones d'extrémité 3 se terminant chacune par un talon 4.

Dans ce qui suit, une direction axiale désigne une direction parallèle à l'axe central 8 de la membrane, une direction radiale désigne une direction perpendiculaire à l'axe central, un plan radial désigne un plan contenant l'axe central et une direction radiale, et une direction circonférentielle désigne une direction perpendiculaire au plan radial.

En fonctionnement, la membrane de cuisson 1 est fixée par les talons 4 aux flasques des plateaux supérieur et inférieur d'une presse de cuisson (non représentés) et, lorsqu'on lui injecte le fluide caloporteur sous pression, elle gonfle et prend une forme générale toroïdale (figure 2b) à l'intérieur de l'enveloppe à vulcaniser placée, elle dans un moule disposé dans la presse de cuisson.

Lorsqu'elle se déploie sous l'effet de la pression du fluide caloporteur, sa paroi flexible s'étend jusqu'à plaquer l'enveloppe crue contre les parois rigides du moule de cuisson. De ce fait, l'épaisseur de la paroi de la membrane diminue dans la zone centrale 2 et dans les zones d'extrémité 3 de manière proportionnelle à la pression appliquée. Ainsi, lors d'un dépôt de couche ou film de revêtement anti-adhérent d'épaisseur constante sur la membrane non déployée, lors du gonflement de celle-ci, le film de revêtement peut se rompre ou se fissurer. De telles fissures ou discontinuités dans le film de revêtement peuvent créer des points d'accroche de l'enveloppe crue ou cuite sur la membrane, ce qui a pour conséquence l'apparition des défauts dans le pneumatique et la détérioration de la membrane de cuisson.

Pour pallier à ce problème, l'invention propose une membrane de cuisson comportant, à l'état étiré mais non gonflé, un film de revêtement en une composition anti-adhérente d'épaisseur variable appliquée de préférence sur la surface utile de la membrane. Par surface utile on comprend la surface de la membrane destinée au contact du pneumatique et qui se trouve hors de sa partie de fixation constituée par la zone des talons 4. Par état étiré de la membrane, on comprend l'état dans lequel elle est tendue pour garder la forme ovoïde illustrée à la fig. 2a, sans former des plis.

Dans un mode de réalisation de l'invention, le film de revêtement en une composition anti-adhérente est appliqué directement sur la surface de la membrane de cuisson.

La figure 1 illustre une installation 100 permettant de réaliser un dépôt d'une ou plusieurs couches de revêtement sur une membrane de cuisson 1. La membrane est supportée par un dispositif 10 comportant un moteur électrique 11 d'entraînement en rotation autour de l'axe central 8 d'un fût 13, via un arbre rotatif 12, fût sur lequel est enfilée et fixée la membrane 1. Le fût 13 est réalisé de manière à pouvoir tendre la membrane 1 (par exemple en lui exerçant un effort de traction ou par un léger gonflage) afin de s'assurer qu'il n'y a pas de plis afin de pouvoir obtenir un dépôt uniforme de la couche de revêtement. L'installation comprend également un bras robotisé 20 qui comporte à son extrémité un pistolet de peinture 21 (par exemple un pistolet électrique) et une torche plasma 22 agencés côte-à-côte sur un plateau 23 commun. Le bras robotisé 20 est amené à se déplacer en direction axiale et radiale par rapport à l'axe 8 de manière à balayer la surface externe de la membrane de cuisson 1.

La torche plasma 22 est utilisée pour réaliser un traitement de la surface de la membrane préalablement au dépôt de revêtement afin d'améliorer la mouillabilité ainsi que l'adhérence de celui-ci. En effet, la première fonction de la torche plasma est d'augmenter l'énergie de surface de la membrane par destruction des composés organiques et d'activation de la surface. La deuxième fonction du plasma est de créer des groupes réactifs permettant aux molécules du revêtement d'adhérer à la surface de la membrane. Le plasma utilisé dans le dispositif de l'invention est un plasma air ou un plasma d'oxygène à basse pression. Un tel plasma permet de remplacer les atomes hydrogènes par des atomes d'oxygène qui fournissent d'électrons de valence libre pour la liaison avec les molécules du revêtement.

Le choix de l'utilisation d'une torche plasma avant le dépôt du revêtement se fait en fonction de la nature de celui-ci. Ainsi, certains revêtements, par exemple les revêtements dont la composition est à base de silicone, présentent une capacité d'adhérence suffisante à la membrane et, dans ce cas, l'utilisation d'une torche plasma n'est plus nécessaire. D'autres revêtements, tels les revêtements à base d'élastomères époxydes reticulables nécessitent un traitement initial par plasma.

En fonctionnement, on installe la membrane 1 sur le fût 13, on la tend légèrement et on la fixe sur le fût. On entraîne en rotation le fût 13 avec la membrane 1 autour de l'axe central 8 et on déplace le bras robotisé 20 en direction axiale et radiale par rapport à l'axe 8 de manière à ce qu'il suive le profil de la membrane 1. Le pistolet 21 dépose une ou plusieurs couches de revêtement anti-adhérent sur la membrane 1, d'épaisseur prédéterminée, tel qu'il sera expliqué dans ce qui suit. Lorsque le revêtement a été déposé sur la membrane 1, on arrête l'alimentation du pistolet 21 et on immobilise le bras robotisé 20. On active un élément chauffant 30, par exemple du type à lampe infrarouge, et on maintient la rotation du fût 13 autour de l'axe 8. Un dispositif d'aspiration 40 est prévu pour éliminer les fumées résultant de la polymérisation du revêtement anti-adhérent. Lorsque le revêtement est polymérisé, on arrête l'installation 100 et on retire la membrane 1 du fût 13. Si l'on souhaite, de plus, réaliser un revêtement anti-adhérent à l'intérieur de la membrane, on retourne la membrane de manière à exposer sa surface intérieure à l'action du bras robotisé 20 et on effectue la même opération que celle décrite auparavant et relative au dépôt d'un film de revêtement à l'extérieur de la membrane.

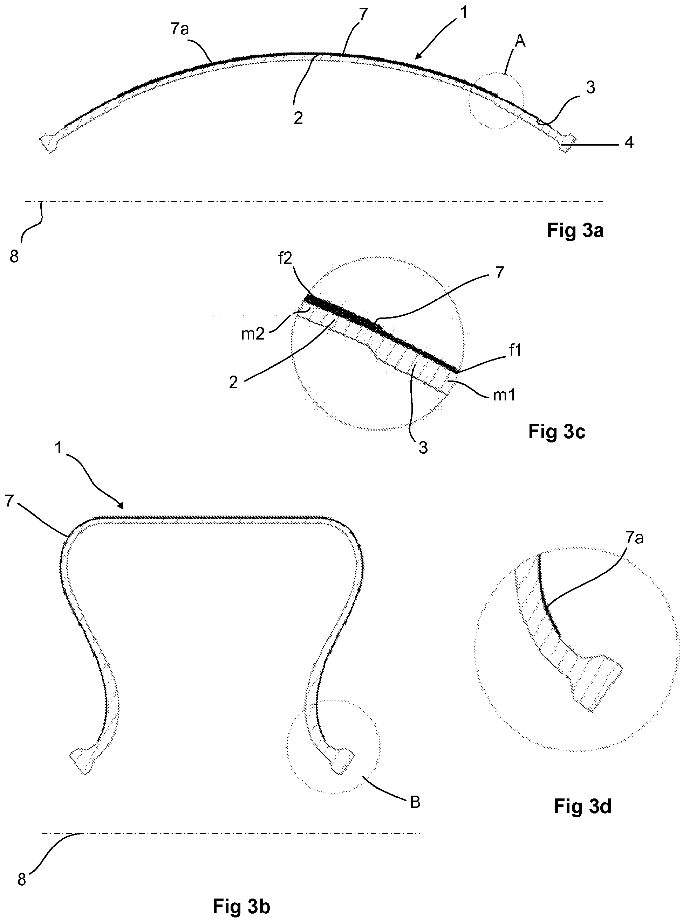

La figure 3a illustre une membrane de cuisson 1 dont la surface externe recouverte d'un film 7 qui est un film de revêtement externe 7a. Tel que mieux visible dans la vue de détail de la figure 3c, la partie centrale 2 de la membrane 1 a une épaisseur m2 et le film de revêtement une épaisseur f2, alors que la partie d'extrémité 3 de la membrane a une épaisseur m1 et le film de revêtement une épaisseur f1. Les épaisseurs sont choisies de manière à ce que m1^{∗}f1=m2^{∗}f2. A titre d'exemple, l'épaisseur de la membrane m1 en zone centrale est de 5mm, l'épaisseur du film f1 dans la même zone est de 42µm et l'épaisseur de la membrane m2 en zone d'extrémité est de 7mm et l'épaisseur du film f2 dans la même zone est de 30µm.

La figure 3b illustre la membrane 1 de la figure 3a en position déployée. Tel que mieux visible à la figure 3d, l'épaisseur du film 7 est constante sur le profil ou surface externe de la membrane déployée.

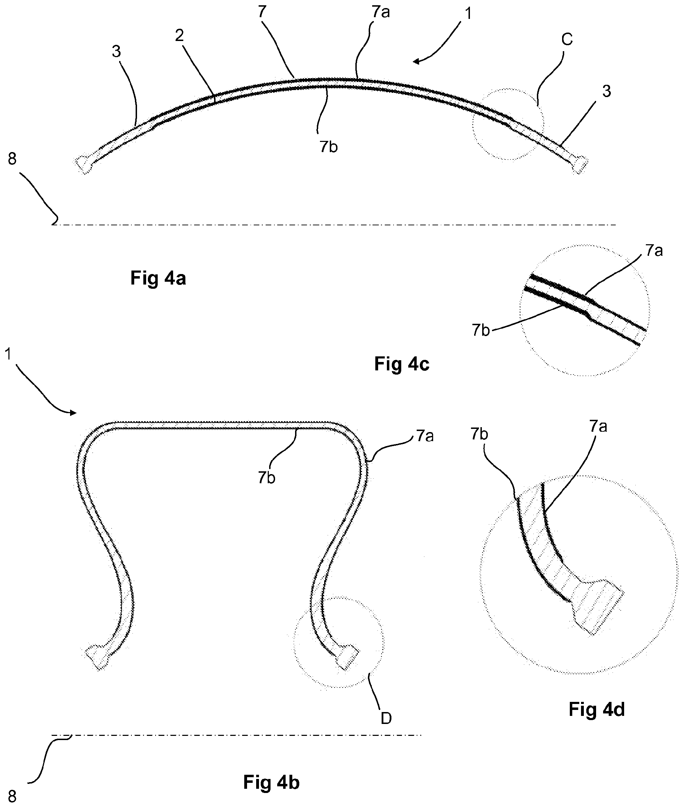

La figure 4a illustre la membrane de cuisson 1 de la figure 3a recouverte, de plus, d'un film de revêtement interne 7b. De manière similaire, le même rapport d'épaisseurs est respecté entre l'épaisseur du film de revêtement interne et l'épaisseur de la paroi de la membrane dans les zones centrale 2 et d'extrémité 3.

La figure 4b illustre la membrane 1 de la figure 4a en position déployée. Tel que mieux visible à la figure 4c, l'épaisseur du film 7 est constante sur le profil ou surface externe et interne de la membrane déployée.

La membrane représentée aux figures annexées est illustrée à titre d'exemple. On connaît différents types de membranes de cuisson dans l'état de la technique avec des géométries différentes, notamment avec des épaisseurs variables de leur paroi flexible. Lors de leur revêtement avec un film en une composition anti-adhérente selon l'invention, l'épaisseur du film 7 de revêtement varie de manière inversement proportionnelle avec l'épaisseur de la paroi en tout point de la surface utile de celle-ci à l'état non gonflé de la membrane.

Dans une variante de réalisation de l'invention, la composition du matériau de revêtement est une composition de silicone durcissable en présence d'eau ou d'humidité de l'air. Une telle composition est du type telle que décrite dans le document WO 2015/082837.

Dans une autre variante de réalisation de l'invention, la composition du matériau de revêtement est une composition de caoutchouc comprenant un élastomère époxyde réticulé par un polyacide carboxylique. Une telle composition est du type telle que décrite dans le document WO 2015/193315 au nom de la demanderesse.

De préférence, la composition du matériau de revêtement interne de la membrane est une composition à base de silicone qui résiste à l'hydrolyse.

Dans un autre mode de réalisation de l'invention, on revêt directement la membrane d'une couche de primaire d'adhésion. On revêt ensuite directement la couche de primaire d'adhésion par une couche de composition de revêtement anti-collant selon l'invention.

Le film de revêtement a une épaisseur comprise entre 5 et 100µm et de préférence comprise entre 15 et 30µm. Il est de préférence réalisé par des dépôts successifs de plusieurs couches superposées. Le film est élastique, il a une capacité d'allongement comprise entre 200 et 300 % et une dureté Shore A comprise entre 0 et 40.

L'épaisseur du film interne de revêtement est différente de celle du film externe de revêtement, et elle est de préférence inférieure à 30µm.

On recouvre la surface externe de la paroi de la membrane d'un revêtement externe à l'aide du dispositif tel que décrit en référence à la figure 1. Pour réaliser le dépôt de revêtement à épaisseur variable sur la surface externe latérale de la paroi, on déplace le bras robotisé 20 selon une trajectoire prédéterminée programmée dans la mémoire de l'automate. La trajectoire est corrélée avec un nombre de passages prédéterminé afin d'obtenir un dépôt d'épaisseur variable sur la paroi. Le pistolet de peinture 21 dépose ainsi par déplacements successifs le long de la paroi de la membrane, lors de la rotation de celle-ci, le nombre de couches nécessaires pour réaliser un film d'épaisseur variable. On choisit les paramètres de celui-ci en fonction de type de revêtement A titre d'exemple, on utilise un pistolet de peinture comportant une buse ayant un diamètre de l'orifice de sortie de 0,9mm, à une pression d'atomisation de 2,5 bars et on pulvérise les particules de la composition de revêtement à une distance d'environ 160 à 180 mm par rapport à la surface de la membrane. Le jet a une largeur de 60mm et on déplace le jet d'un pas d'environ 30mm par tour de rotation de la membrane jusqu'à obtenir le film d'épaisseur souhaitée.

On recouvre ainsi une membrane de cuisson d'un film d'épaisseur variable sur sa surface externe et interne. On fixe ensuite la membrane de cuisson par ses talons sur les plateaux de support de la membrane au sein d'une presse de cuisson. La membrane peut alors venir au contact de l'ébauche de pneumatique sans adhérer à celle-ci et sans devoir enduire au préalable de produit anti-collant la surface interne de l'ébauche de pneumatique avant la cuisson lors de la fabrication d'un pneumatique. Dans les tests effectués en laboratoire, il s'est avéré que le revêtement ainsi obtenu résiste à de nombreux cycles de cuisson.

D'autres variantes et modes de réalisation de l'invention peuvent être envisagés sans sortir du cadre de ses revendications.

On peut envisager de déposer un revêtement anti-adhérent d'épaisseur variable dans la zone centrale de la membrane de manière à renforcer les zones les plus sollicitées de la membrane, par exemple la zone des épaules, car il s'agit de la zone de la membrane présentant les déformations les plus importantes (jusqu'à 40% d'élongation).

## Revendications

1. Membrane de cuisson (1) pour pneumatique ayant une forme de révolution autour d'un axe central (8) et comportant une paroi flexible en caoutchouc réticulé, la surface de la paroi étant recouverte d'un film (7) de revêtement en une composition anti-adhérente, et lorsque la membrane est dans un état non gonflé, la paroi de ladite membrane présente des zones qui sont destinées à être plus sollicitées en déformation par élongation que d'autres zones de ladite paroi lorsque l'on gonfle la membrane pour faire passer ladite membrane de l'état non gonflé à un état déployé dans lequel la surface de la membrane vient au contact du pneumatique, **caractérisée en ce que**, dans l'état non gonflé, le film de revêtement a une épaisseur prédéterminée qui d'une part est comprise entre 5 µm et 100 µm et qui d'autre part est variable sur ladite surface de manière que le film de revêtement est plus épais dans lesdites zones de la paroi destinées à être plus sollicitées en déformation par élongation que dans lesdites autres zones de la paroi afin que ledit film de revêtement puisse présenter une épaisseur constante à l'état déployé.

2. Membrane selon la revendication 1, **caractérisée en ce que** ledit film (7) de revêtement est élastique.

3. Membrane selon la revendication 2, **caractérisée en ce que** ladite paroi a une épaisseur variable et **en ce que** l'épaisseur du film (7) de revêtement varie de manière inversement proportionnelle avec l'épaisseur de la paroi.

4. Membrane selon la revendication 3, **caractérisée en ce que** le rapport des épaisseurs de la paroi de la membrane dans deux zones contiguës est égal au rapport des épaisseurs du film de revêtement dans les mêmes zones.

5. Membrane selon l'une des revendications précédentes **caractérisée en ce qu'**elle présente une zone centrale (2) qui présente une épaisseur notée m2 et une zone d'extrémité (3) qui présente une épaisseur notée m1 et qui se termine par un talon (4) permettant de fixer la membrane au plateau d'une presse de cuisson, **en ce que** le film (7) de revêtement a une épaisseur notée f2 dans la zone centrale (2) et une épaisseur notée f1 dans la zone d'extrémité (3), épaisseurs f1, f2 qui sont choisies de manière à ce que m1^{∗}f1 = m2^{∗}f2.

6. Membrane selon l'une des revendications 1 à 5, **caractérisée en ce que** la surface externe de ladite paroi est recouverte d'un film de revêtement externe (7a).

7. Membrane selon la revendication 6, **caractérisée en ce que** la surface interne de ladite paroi est recouverte d'un film de revêtement interne (7b).

8. Membrane selon la revendication 7, **caractérisée en ce que** la composition du film de revêtement interne (7b) est différente de celle du film de revêtement externe (7a).

9. Procédé de fabrication d'une membrane de cuisson (1) pour pneumatique ayant une forme de révolution autour d'un axe central (8) et comportant une paroi flexible en caoutchouc réticulé, dans lequel on recouvre la surface de la paroi flexible avec un film en une composition anti-adhérente, **caractérisé en ce que** l'on identifie sur la paroi de la membrane, dans un état non gonflé, des zones qui sont destinées à être plus sollicitées en déformation par élongation que d'autres zones de ladite paroi, lorsque l'on gonfle la membrane pour faire passer ladite membrane de l'état non gonflé à un état déployé dans lequel la surface de la membrane vient au contact du pneumatique, puis l'on effectue sur ladite paroi, tandis que la membrane est dans l'état non gonflé, un dépôt de ladite composition, de sorte à former sur ladite paroi un film de revêtement qui a une épaisseur prédéterminée comprise entre 5 µm et 100 µm et dont ladite épaisseur est variable de manière que le film de revêtement est, à l'état non gonflé, plus épais dans lesdites zones identifiées comme étant plus sollicitées par la déformation par élongation que dans les autres zones de la paroi afin que ledit film de revêtement puisse présenter une épaisseur constante à l'état déployé.

10. Procédé selon la revendication 9, **caractérisé en ce qu'**on effectue ledit dépôt de composition anti-adhérente par pulvérisation à l'aide d'un pistolet de peinture (21) et en déplaçant axialement et radialement ledit pistolet par rapport à la membrane lors de la rotation de celle-ci.

11. Procédé selon la revendication 10, **caractérisé en ce que** l'épaisseur dudit film varie avec le rapport entre la vitesse de déplacement axial du pistolet de peinture (21) et la vitesse de rotation de la membrane.

12. Utilisation d'une membrane de cuisson selon l'une des revendications 1 à 8 dans un procédé de fabrication de pneumatique.

## Patentansprüche

1. Aushärtemembran (1) für einen Reifen, die eine Rotationsform um eine zentrale Achse (8) hat und eine flexible Wand aus vernetztem Kautschuk aufweist, wobei die Oberfläche der Wand mit einem Beschichtungsfilm (7) aus einer nicht haftenden Zusammensetzung beschichtet ist und wobei, wenn sich die Membran in einem nicht aufgeblasenen Zustand befindet, die Wand der Membran Bereiche aufweist, die dazu bestimmt sind, stärker als andere Bereiche der Wand durch Dehnungsverformung beansprucht zu werden, wenn die Membran aufgeblasen wird, um die Membran aus dem nicht aufgeblasenen Zustand in einen entfalteten Zustand zu überführen, in dem die Oberfläche der Membran mit dem Reifen in Kontakt kommt, **dadurch gekennzeichnet, dass** im nicht aufgeblasenen Zustand der Beschichtungsfilm eine vorbestimmte Dicke aufweist, die einerseits zwischen 5 um und 100 um beträgt und die andererseits über die Oberfläche variabel ist, sodass der Beschichtungsfilm in den Bereichen der Wand, die dazu bestimmt sind, stärker durch Dehnungsverformung beansprucht zu werden, dicker ist als in den anderen Bereichen der Wand, damit der Beschichtungsfilm im entfalteten Zustand eine konstante Dicke aufweisen kann.

2. Membran nach Anspruch 1, **dadurch gekennzeichnet, dass** der Beschichtungsfilm (7) elastisch ist.

3. Membran nach Anspruch 2, **dadurch gekennzeichnet, dass** die Wand eine variable Dicke aufweist und dass die Dicke des Beschichtungsfilms (7) umgekehrt proportional zur Dicke der Wand variiert.

4. Membran nach Anspruch 3, **dadurch gekennzeichnet, dass** das Verhältnis der Wanddicken der Membran in zwei aneinandergrenzenden Bereichen gleich dem Verhältnis der Beschichtungsfilmdicken in denselben Bereichen ist.

5. Membran nach einem der vorangehenden Ansprüche **dadurch gekennzeichnet, dass** sie einen zentralen Bereich (2) mit einer mit m2 bezeichneten Dicke und einen Endbereich (3) mit einer mit m1 bezeichneten Dicke aufweist, der in einem Absatz (4) endet, der es ermöglicht, die Membran an der Platte einer Aushärtepresse zu befestigen, und dass der Beschichtungsfilm (7) im zentralen Bereich (2) eine mit f2 bezeichnete Dicke und im Endbereich (3) eine mit f1 bezeichnete Dicke aufweist, wobei die Dicken f1, f2 so gewählt sind, dass m1 * f1 = m2 * f2.

6. Membran nach einem der Ansprüche 1 bis 5, **dadurch gekennzeichnet, dass** die Außenfläche der Wand mit einem äußeren Beschichtungsfilm (7a) beschichtet ist.

7. Membran nach Anspruch 6, **dadurch gekennzeichnet, dass** die Innenfläche der Wand mit einem inneren Beschichtungsfilm (7b) beschichtet ist.

8. Membran nach Anspruch 7, **dadurch gekennzeichnet, dass** sich die Zusammensetzung des inneren Beschichtungsfilms (7b) von der des äußeren Beschichtungsfilms (7a) unterscheidet.

9. Verfahren zur Herstellung einer Aushärtemembran (1) für einen Reifen, die eine Rotationsform um eine zentrale Achse (8) hat und eine flexible Wand aus vernetztem Kautschuk aufweist, wobei die Oberfläche der flexiblen Wand mit einem Film aus einer nichthaftenden Zusammensetzung beschichtet wird, **dadurch gekennzeichnet, dass** an der Wand der Membran in einem nicht aufgeblasenen Zustand Bereiche identifiziert werden, die dazu bestimmt sind, stärker als andere Bereiche der Wand durch Dehnungsverformung beansprucht zu werden, wenn die Membran aufgeblasen wird, um die Membran aus dem nicht aufgeblasenen Zustand in einen entfalteten Zustand zu überführen, in dem die Oberfläche der Membran mit dem Reifen in Kontakt kommt, wobei dann auf der Wand, wenn sich die Membran im nicht aufgeblasenen Zustand befindet, eine Abscheidung der Zusammensetzung vorgenommen wird, um auf der Wand einen Beschichtungsfilm zu bilden, der eine vorbestimmte Dicke zwischen 5 um und 100 um aufweist und dessen Dicke variabel ist, sodass der Beschichtungsfilm im nicht aufgeblasenen Zustand in den Bereichen, die als stärker durch Dehnungsverformung beansprucht identifiziert wurden, dicker ist als in den anderen Bereichen der Wand, damit der Beschichtungsfilm im entfaltete Zustand eine konstante Dicke aufweisen kann.

10. Verfahren nach Anspruch 9, **dadurch gekennzeichnet, dass** die Abscheidung der nichthaftenden Zusammensetzung durch Aufsprühen mittels einer Spritzpistole (21) und axiales und radiales Bewegen der Pistole in Bezug auf die Membran während der Drehung derselben erfolgt.

11. Verfahren nach Anspruch 10, **dadurch gekennzeichnet, dass** die Dicke des Films mit dem Verhältnis zwischen der Geschwindigkeit der axialen Bewegung der Spritzpistole (21) und der Rotationsgeschwindigkeit der Membran variiert.

12. Verwendung einer Aushärtemembran nach einem der Ansprüche 1 bis 8 in einem Verfahren zur Herstellung eines Reifens.

## Claims

1. Curing bladder (1) for a tyre having a shape of revolution around a central axis (8) and comprising a flexible wall made of crosslinked rubber, the surface of the wall being covered with a coating film (7) made of a non-stick composition and, when the bladder is in a non-inflated state, the wall of said bladder exhibiting zones which are intended to be more stressed in deformation by elongation than other zones of said wall when the bladder is inflated in order to cause said bladder to change from the non-inflated state to an opened-out state in which the surface of the bladder comes into contact with the tyre, **characterized in that**, in the non-inflated state, the coating film has a predetermined thickness which, on the one hand, is between 5 µm and 100 µm and which, on the other hand, is variable over said surface so that the coating film is thicker in said zones of the wall which are intended to be more stressed in deformation by elongation than in said other zones of the wall, in order for said coating film to be able to exhibit an unvarying thickness in the opened-out state.

2. Bladder according to Claim 1, **characterized in that** the said coating film (7) is elastic.

3. Bladder according to Claim 2, **characterized in that** the said wall has a variable thickness and **in that** the thickness of the coating film (7) varies in an inversely proportional manner with the thickness of the wall.

4. Bladder according to Claim 3, **characterized in that** the ratio of the thicknesses of the wall of the bladder in two contiguous zones is equal to the ratio of the thicknesses of the coating film in the same zones.

5. Bladder according to one of the preceding claims, **characterized in that** it exhibits a central zone (2) which exhibits a thickness denoted m2 and an end zone (3) which exhibits a thickness denoted m1 and which is terminated by a heel (4) which makes it possible to fix the bladder to the platen of a curing press, **in that** the coating film (7) has a thickness denoted f2 in the central zone (2) and a thickness denoted f1 in the end zone (3), which thicknesses f1 and f2 are chosen so that m1*f1 = m2*f2.

6. Bladder according to one of Claims 1 to 5, **characterized in that** the external surface of the said wall is covered with an external coating film (7a) .

7. Bladder according to Claim 6, **characterized in that** the internal surface of the said wall is covered with an internal coating film (7b).

8. Bladder according to Claim 7, **characterized in that** the composition of the internal coating film (7b) is different from that of the external coating film (7a) .

9. Process for the manufacture of a curing bladder (1) for a tyre having a shape of revolution around a central axis (8) and comprising a flexible wall made of crosslinked rubber, in which the surface of the flexible wall is covered with a film made of a non-stick composition, **characterized in that** there are identified, on the wall of the bladder, in a non-inflated state, zones which are intended to be more stressed in deformation by elongation than other zones of said wall, when the bladder is inflated in order to cause said bladder to change from the non-inflated state to an opened-out state in which the surface of the bladder comes into contact with the tyre, then, while the bladder is in the non-inflated state, a deposition of said composition is carried out on said wall, so as to form, on said wall, a coating film which has a predetermined thickness of between 5 µm and 100 µm and said thickness of which is variable so that the coating film is, in the non-inflated state, thicker in said zones identified as being more stressed by the deformation by elongation than in the other zones of the wall, in order for said coating film to be able to exhibit an unvarying thickness in the opened-out state.

10. Process according to Claim 9, **characterized in that** the said deposition of non-stick composition is carried out by spraying using a paint gun (21) and while axially and radially displacing the said gun with respect to the bladder during the rotation of the latter.

11. Process according to Claim 10, **characterized in that** the thickness of the said film varies with the ratio of the rate of axial displacement of the paint gun (21) to the rate of rotation of the bladder.

12. Use of a curing bladder according to one of Claims 1 to 8 in a tyre manufacturing process.
